# EUROPEAN PATENT APPLICATION

(11) **EP 4 083 773 A1**
(43) Date of publication of application: **02.11.2022**
(21) Application number: 20907188.5
(22) Date of filing: 28.06.2020
(51) Int. Cl.: G06F 3/0484, G06F 9/44

(54) **INTERFACE DISPLAY METHOD AND DEVICE, STORAGE MEDIUM, AND ELECTRONIC DEVICE**

(30) Priority: 27.12.2019 CN 201911380541
(71) Applicant: ZTE Corporation, Shenzhen, Guangdong 518057 (CN)
(72) Inventor: XUE, Han, Shenzhen, Guangdong 518057 (CN)
(74) Representative: Pennacchio, Salvatore Giovanni
(86) International application number: PCT/CN2020/098597
(87) International publication number: WO 2021/128783

(57) **Abstract**

Provided are an interface display method and device, a storage medium, and an electronic device. The method includes: a plurality of predetermined functions of a terminal are displayed on a first-level display interface of the terminal; and a first operation performed by a target object is received on the first-level display interface and the terminal is controlled to display a second-level display interface in responsive to the first operation, wherein the second-level display interface is used to respectively display a plurality of different predetermined sub-functions corresponding to the plurality of predetermined functions, the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface. By employing the foregoing technical solution, the problems that the costs for producing a demo version are high and the demo version cannot be flexibly produced during the process of product release in related technology are solved.

## Description

### Technical Field

The present disclosure relates to the field of wireless communication, in particular to an interface display method and device, a storage medium, and an electronic device.

### Background

With the development of smart phone-related technologies, smart phone updates and iterations are extremely fast, and all terminal manufacturers try their best to use new technologies to release new products to attract users and occupy the market. Product display is an important part in the process of new product release and product sales. Taking mobile phones as an example, previous exhibition halls and physical stores used idiosyncratic mobile phone picture boards to make displays and attract users. With the development of technologies, more and more exhibition halls and physical stores show users with real prototypes, and users can intuitively and truly operate the displayed prototypes, thus raising the user experience to a higher level.

New product launch and product display are the first operation for consumers to know about products. In related technology, it is necessary to make a special demo version for each model project. The demo version is different from the delivery version of ordinary products sold to customers, which makes the prototypes in the exhibition halls unable to be sold again after the display, and there are problems of high cost in making demo version and lack of universality.

In related art, the commonly used solution for terminal product display is: a special demo version is provided for each model project, display resources are preset in a default resource directory of the system, and the prototype in the exhibition hall adopts the special demo version, and once being preset, the display resources cannot be changed, which makes the use of the demo version very limited.

For the problems in the related technology that during the process of product release, the costs for producing a demo version are high, and the demo version cannot be flexibly produced, no effective technical solution has been put forward.

### Summary

Embodiments of the present disclosure provide an interface display method and device, a storage medium, and an electronic device, which can at least solve the problems in related technology that during the process of product release, the costs for producing a demo version are high, and the demo version cannot be flexibly produced.

According to an embodiment of the present disclosure, an interface display method is provided, which includes that: a plurality of predetermined functions of a terminal are displayed on a first-level display interface of the terminal; and a first operation performed by a target object is received on the first-level display interface and the terminal is controlled to display a second-level display interface in responsive to the first operation, wherein the second-level display interface is used to respectively display a plurality of different predetermined sub-functions corresponding to the plurality of predetermined functions, the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface.

According to another embodiment of the present disclosure, an interface display device is further provided, which includes: a first display module, configured to display a plurality of predetermined functions of a terminal on a first-level display interface of the terminal; and a first receiving module, configured to receive, on the first-level display interface, a first operation performed by a target object, and control the terminal to display a second-level display interface in responsive to the first operation, wherein the second-level display interface is used to respectively display a plurality of different predetermined sub-functions corresponding to the plurality of predetermined functions, the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface.

According to another embodiment of the present disclosure, a computer-readable storage medium is further provided. The storage medium includes a stored program. Herein, when running, the program executes the interface display method as described by any of the above.

According to another embodiment of the present disclosure, an electronic device is further provided. The storage medium includes a stored program. Herein, when running, the program executes the interface display method as described by any of the above.

According to the embodiments of the present disclosure, a plurality of predetermined functions of a terminal are displayed on a first-level display interface of the terminal; and in a case where a first operation executed by a target object is received on the first-level display interface, the terminal is controlled to display a second-level display interface. The second-level display interface may display a plurality of predetermined sub-functions corresponding to the plurality of predetermined functions. A first modification operation performed by the target object may be received through a first interface disposed in the first-level display interface so as to modify a display strategy of the first-level display interface, and a second modification operation performed by the target object may be received through a second interface disposed in the second-level display interface so as to modify a display strategy of the second-level display interface. By the adoption of the technical solution, the display strategy of the first-level display interface can be modified through the first interface of the first-level display interface, and the display strategy of the second-level display interface can also be modified through the second interface of the second-level display interface, so that the technical effect of flexibly modifying the display strategy of the display interface is achieved, and the problems of high cost in producing a demo version and inability to flexibly produce the demo version during the process of product release in the related technology are solved.

### Brief Description of the Drawings

The drawings described herein are for further understanding of the present disclosure and consist a part of the present disclosure. The schematic embodiments and description thereof are used for explaining the present disclosure and do not limit the present disclosure improperly. In the drawings:
Fig. 1 is a structural block diagram of hardware of a terminal for implementing an interface display method according to an embodiment of the present disclosure.
Fig. 2 is an exemplary flowchart of an interface display method according to an embodiment of the present disclosure.
Fig. 3 is an exemplary structural block diagram of an interface display device according to an embodiment of the present disclosure.
Fig. 4 is an exemplary schematic diagram of a first-level interface according to an embodiment of the present disclosure.
Fig. 5 is an exemplary schematic diagram of a second-level interface according to an embodiment of the present disclosure.
Fig. 6 is an exemplary schematic diagram of a third-level interface according to an embodiment of the present disclosure.
Fig. 7 is an exemplary schematic diagram of a resource directory 1 according to an embodiment of the present disclosure.
Fig. 8 is an exemplary schematic diagram of a resource directory 2 according to an embodiment of the present disclosure.
Fig. 9 is an exemplary schematic diagram of a resource directory 3 according to an embodiment of the present disclosure.
Fig. 10 is another exemplary structural block diagram of an interface display device according to an embodiment of the present disclosure.
Fig. 11 is yet another exemplary structural block diagram of an interface display device according to an embodiment of the present disclosure.

### Detailed Description

The present disclosure will be described in detail with reference to the accompanying drawings and embodiments. It is to be noted that the embodiments of the present disclosure and the features in the embodiments may be combined with each other without conflict.

It is to be noted that the terms "first", "second", etc., in the specification, claims, and drawings of the present disclosure are not always adopted to describe a specific sequence or order, but may be adopted to distinguish similar objects.

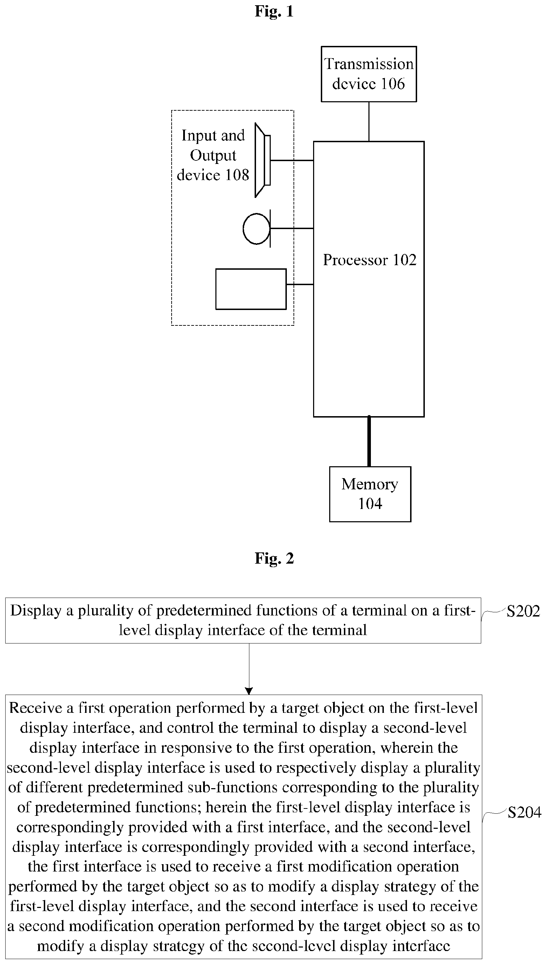

The method embodiment provided by the embodiment of the present disclosure may be executed in a mobile terminal, a computer terminal or a similar computing device. Taking running on a terminal (such as a mobile phone) as an example, Fig. 1 is a structural block diagram of hardware of a terminal for implementing an interface display method according to an embodiment of the present disclosure. As shown in Fig. 1, a terminal (such as a mobile phone) 10 includes one or more (only one is shown in Fig. 1) processors 102 (the processors 102 may include, but are not limited to, processing devices such as a microprocessor MCU or a programmable logic device FPGA, etc.) and a memory 104 for storing data. In some exemplary implementations, the mobile terminal may also include a transmission device 106 for communication functions and an input and output device 108. Those skilled in the art may understand that the structure shown in Fig. 1 is only schematic, and does not limit the structure of the above-mentioned terminal. For example, the mobile terminal 10 may also include more or less components than those shown in Fig. 1, or have different configurations with the same functions as those shown in Fig. 1 or more functions than those shown in Fig. 1.

The memory 104 may be used to store a computer program, for example, a software program and a module of application software, such as a computer program corresponding to the interface display method in the embodiment of the present disclosure. The processor 102 executes various functional applications and data processing by running the computer program stored in the memory 104. That is, the above method is implemented. The memory 104 may include a high-speed random access memory and may further include a non-volatile memory, such as one or more magnetic storage devices, a flash memory, or other non-volatile solid-state memories. In some examples, the memory 104 may further include memories remotely located relative to the processor 102, and these remote memories may be connected to the terminal 10 through a network. Examples of the above network include, but are not limited to, the Internet, Intranet, local area network, mobile communication network and combinations thereof.

The transmission device 106 is used to receive or send data via one network. Specific examples of the above-mentioned network may include a wireless network provided by a communication provider of the terminal 10. In an example, the transmission device 106 includes a Network Interface Controller (NIC), which may be connected to other network devices through a base station so as to communicate with the Internet. In an example, the transmission device 106 may be a Radio Frequency (RF) module, which is used to communicate with the Internet in a wireless manner.

In the embodiment, an interface display method running on the terminal shown in Fig. 1 is provided, and Fig. 2 is an exemplary flowchart of an interface display method according to an embodiment of the present disclosure. As shown in Fig. 2, the method includes the following operations.

At S202, a plurality of predetermined functions of the terminal is displayed on a first-level display interface of a terminal.

At S204, a first operation performed by a target object is received on the first-level display interface, and the terminal is controlled to display a second-level display interface in responsive to the first operation, wherein the second-level display interface is used to respectively display a plurality of different predetermined sub-functions corresponding to the plurality of predetermined functions.

Herein, the first-level display interface is correspondingly provided with a first interface, and the second-level display interface is correspondingly provided with a second interface. The first interface is used to receive a first modification operation performed by the target object so as to modify a display strategy of the first-level display interface, and the second interface is used to receive a second modification operation performed by the target object so as to modify a display strategy of the second-level display interface.

In some exemplary implementations, taking the terminal as an example, the predetermined function may be understood as a function of displaying featured selling preposition information of the terminal. The predetermined function may be displayed in the first-level interface in the form of a list. For example, the first-level interface includes four predetermined functions A, B, C and D. When a first operation performed by the target object is received, such as clicking a button corresponding to the predetermined function A, the terminal may jump from the first-level display interface to the second-level display interface. At this time, the second-level display interface displays the predetermined sub-functions corresponding to the predetermined function A. For example, the predetermined function A may be an introduction of one of the featured selling preposition information of the terminal, and the predetermined sub-function may be detailed information corresponding to the featured selling preposition.

In some exemplary implementations, the first-level display interface may be correspondingly provided with the first interface, and the display strategy of the first-level display interface may be modified when the first modification operation performed by the target object is received. The second-level display interface may be correspondingly provided with the second interface, and the display strategy of the second-level display interface may be modified when the second modification operation performed by the target object is received. Herein, the display strategy may be understood as display content, a display mode, etc. of the display interface.

According to the embodiment of the present disclosure, a plurality of predetermined functions of a terminal are displayed on a first-level display interface of the terminal; and in a case where a first operation executed by a target object is received on the first-level display interface, the terminal is controlled to display a second-level display interface. The second-level interface may display a plurality of predetermined sub-functions corresponding to the plurality of predetermined functions. A first modification operation performed by the target object may be received through a first interface disposed in the first-level display interface so as to modify a display strategy of the first-level display interface, and the second modification operation performed by the target object may also be received through a second interface disposed in the second-level display interface so as to modify a display strategy of the second-level display interface. By the adoption of the technical solution, the display strategy of the first-level display interface can be modified through the first interface of the first-level display interface, and the display strategy of the second-level display interface can also be modified through the second interface of the second-level display interface, so that the technical effect of flexibly modifying the display strategy of the display interface is achieved, and the problems of high cost in producing a demo version and inability to flexibly produce the demo version during the process of product release in the related technology are solved.

In the embodiment of the present disclosure, after the above operation S204, the following operations may be further included. After the first operation performed by the target object is received on the first-level display interface and the terminal is controlled to display the second-level display interface in responsive to the first operation, the method may further include that: a second operation performed by the target object is received on the second-level display interface, and the terminal is controlled to display a third-level display interface in responsive to the second operation. The third-level display interface is used to display a plurality of pieces of multimedia information corresponding to the plurality of predetermined sub-functions.

In some exemplary implementations, the interface display method may also include the following implementations. The method may further include at least one of the following operations. In a case where the first modification operation performed by the target object is received, a first resource set is stored into a first resource directory through the first interface in responsive to the first modification operation, wherein the first resource set is used to represent file information corresponding to the plurality of predetermined functions. In a case where the second modification operation performed by the target object is received, a second resource set is stored into a second resource directory through the second interface in responsive to the second modification operation, wherein the second resource set is used to represent the file information corresponding to the plurality of predetermined sub-functions. In a case where a third modification operation performed by the target object is received, a third resource set is stored into a third resource directory through a third interface in responsive to the third modification operation, wherein the third resource set is used to represent the file information corresponding to the plurality of pieces of multimedia information, and the third interface is used to receive the third modification operation performed by the target object so as to modify the display strategy of the three-level display interface.

In the embodiment of the present disclosure, at least the following implementation operations may also be included. The method may further include at least one of the following operations. A first identifier of the first resource set is acquired, and the first resource set is stored into the first resource directory according to the first identifier and through the first interface. A second identifier of the second resource set is acquired, and the second resource set is stored into the second resource directory according to the second identifier and through the second interface, wherein the second identifier corresponds to the first identifier. A multimedia resource set is stored into the third resource directory according to the second identifier and a file type of the third resource set and through the third interface.

Before the above operation S204, the method may further include the following operations. Before the first operation performed by the target object is received by the first-level display interface, the method may further include that: a monitoring event is set; and in a case where a monitor monitors that the monitoring event is triggered, the first-level display interface receives the first operation performed by the target object.

The interface display process is explained below in combination with an example without limiting the technical solution of the embodiments of the present disclosure. The exemplified technical solution of the present disclosure is as follows.

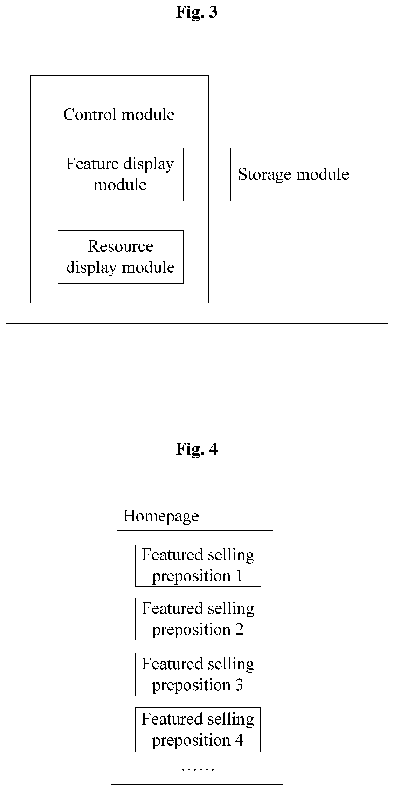

As shown in Fig. 3, the method shown in the embodiment of the present disclosure may be applied to demo software. As shown in Fig. 3, which is a structural block diagram of the corresponding device of the demo software, the device mainly includes a control module, a feature display module and a resource display module. Herein, the feature display module may display featured selling prepositions of the current terminal (such as a mobile phone) in the form of a list. A first-level interface (corresponding to the above-mentioned first-level display interface) and a second-level interface (corresponding to the above-mentioned second-level display interface) may be included. The first-level interface is used to display main featured selling prepositions, and may jump to the second-level interface when a click on a certain selling preposition is detected. The second-level page displays the detailed information of each featured selling preposition in a list, and may jump to a resource display interface when a click on a certain detail is detected. The resource display module is used to display featured resources corresponding to the current details, including video or picture resources, etc. The control module is used to implement the functions of page jumping, resource reading and display.

The storage module is used to store a demo video or picture resource. The device provides an interface, through which users (corresponding to the above-mentioned target object) can manually add display resources to a specified resource directory. The resource directory may be divided into three levels, and resources of different levels may be dynamically replaced or added.

The first-level interface, the second-level interface and the third-level interface in the interface display method are explained below in combination with an example without limiting the technical solution of the embodiments of the present disclosure, which is described as follows.

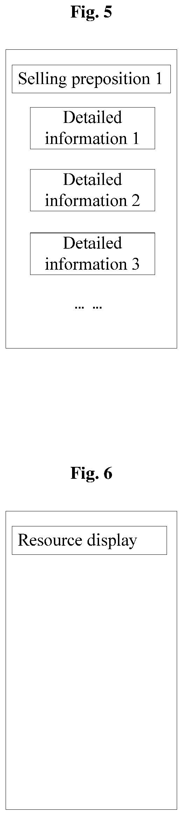

As shown in Fig. 4, the first-level interface shown in Fig. 4 is a selling preposition aggregation page, and the page displays all featured selling preposition resources in the resource directory 1 in the form of a list. A user may dynamically adjust the resources through the interface. After a click on each featured selling preposition in Fig. 4 is detected, the page jumps to a detailed interface corresponding to the selling preposition, that is, jumps to the second-level interface shown in Fig. 5. Taking a click on a featured selling preposition 1 as an example, when a button corresponding to the featured selling preposition 1 is clicked, the page jumps to the detailed interface of the featured selling preposition 1. The resources in the page are all detailed resources corresponding to the featured selling preposition 1 in the resource directory 2, and this part of resources may also be dynamically adjusted by the user through the interface. The page may jump to the third-level interface after the user clicks on a certain detail, such as the resource display interface shown in Fig. 6. The resource display interface may be used to display the specific video or picture resources corresponding to a certain detail. This part of resources is stored in the resource directory 3, and the user may also dynamically adjust the resources through the interface.

Herein, the resource directory of the above demo software is mainly divided into three levels.

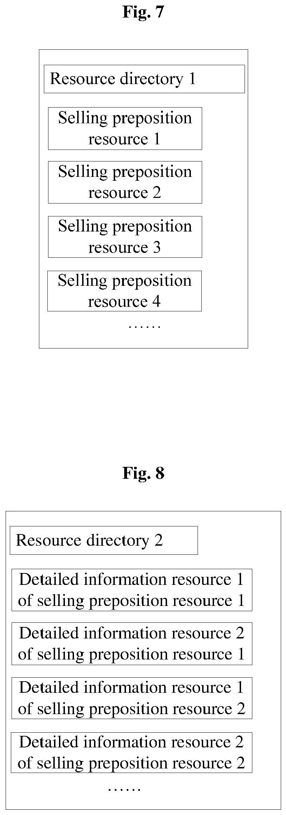

The resource directory 1 shown in Fig. 7 is used to store all the featured selling preposition resource profiles of the homepage of the software. The resources are mainly composed of pictures and text descriptions, and different resources are distinguished by Identifiers (ids). For example, the resource names may be distinguished by 100, 200, 300, ... (corresponding to the above first identifier). Herein, the resource directory 1 corresponds to the above-mentioned first resource directory, and the featured selling prepositions 1-4 in Fig. 7 correspond to the above-mentioned first resource set.

The resource directory 2 shown in Fig. 8 is used to store the detailed resources corresponding to each featured selling preposition. Different selling preposition resources need to be distributed in different directories, thus forming a corresponding relationship with the resources in the resource directory 1. This part of resources is mainly composed of pictures and text descriptions, and different selling preposition resources are still distinguished by ids. For example, the detailed resource ids of the selling preposition with id being 100 may be distinguished by 101, 102, ... (corresponding to the above-mentioned second identifier), and the detailed resource ids of the selling preposition with id being 200 may be distinguished by 201, 202, ... (corresponding to the above-mentioned second identifier). Herein, the resource directory 2 corresponds to the above-mentioned second resource directory, and the detailed resources of selling preposition resources in Fig. 8 correspond to the above-mentioned second resource set.

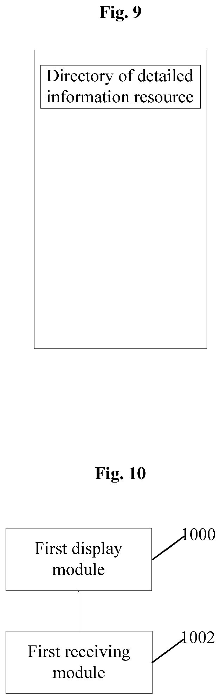

The resource directory 3 shown in Fig. 9 is used to store the pictures or video resources to be displayed for each specific selling preposition detail. This part of resources is classified in the form of a folder, and the folder may be named according to the details id corresponding to this part of resources. Herein, the resource directory 3 corresponds to the above-mentioned third resource directory, and the detailed resource directory in Fig. 8 corresponds to the above-mentioned third resource set.

For each resource directory, the user can manually add or replace the resources to be displayed to the specified resource directory through the interface provided by the demo software.

Herein, resource reading and saving may be implemented through the following operations.

At S1, all resources in a resource directory 1 are read, and the picture resources are converted into Drawable in a Bitmap format, and stored in an array variable int[] mainMenuImageIds in classification by id, such as new int [] { 100,200,300}. Text introductions are stored in a string array String[] mainMenuTitles in classification by id, such as new string [] {"XXX", "XXX", "XXX"}.

At S2, all resources in the resource directory 2 are read, and are stored in a data structure in the form of HashMap < Integer, int [] > secondMenuimage, such as (100, new int[]{101,102}) in classification by the resource id.

At S3, all resources in the resource directory 3 are read, and absolute paths of the resources are stored in a data structure in the form of HashMap<Integer,String[]> thirdMenuResource in classification by id, such as (101, new String[]{"xxx. jpg"}), and (201, new String[]{"xxx. mp4"}).

Herein, resource display may be implemented through the following specific operations.

At S1, first-level interface display: mainMenuImageIds are transferred as parameters to RecyclerView, and all the resources are automatically displayed in the form of a list; and a click event monitor is disposed for each resource item. After a certain resource item is clicked, the interface will jump to the second-level interface through Intent, and the id of the resource is passed in as a parameter.

At S2, second-level interface display: according to the id transferred from the first-level interface, a resource array corresponding to the id is taken out from secondMenuImage, and is sent into the RecyclerView of the second-level interface as a parameter, and all resources are displayed in the form of a list. A click event monitor is disposed for each item, all the display resources corresponding to the current detailed resources are queried from thirdMenuResource according to the resource id of the current item, and video playing or picture display is performed according to the paths of the display resources.

In conclusion, the above demo version does not need to be preset in the system version, or a dedicated demo version for each project is not needed. Demo software corresponding to the demo version may be installed in a common delivery version, and a resource adding module is additionally disposed in the demo software. An interface is provided to the outside and dynamic replacement of the display resources is supported, so that good universality and expansibility are achieved, and making a dedicated demo version is avoided. Moreover, the demo prototype adopts a common delivery version, and the prototype may still be used for subsequent sales, thus saving manpower and material resources as well as the cost.

Through the description of the above embodiments, those skilled in the art can clearly understand that the above embodiment method can be realized by means of software and necessary general hardware platforms. Of course, it can also be realized by hardware, but in many cases, the former is a better embodiment. Based on this understanding, the technical solution of the present disclosure essentially or the part that contributes to the traditional art can be embodied in the form of a software product. The computer software product is stored in a storage medium (such as a ROM/RAM, a magnetic disc and a compact disc), including several instructions to make a terminal device (which may be a mobile phone, a computer, a server, or a network device, etc.) to execute the method described in various embodiments of the present disclosure.

In the embodiment, an interface display device is also provided, and the device is used to implement the above-mentioned embodiment and preferred implementation, and the descriptions already made will not be repeated. The term "module" used below can realize a combination of software and/or hardware with a predetermined function. Although the device described in the following embodiment may be realized through software better, the realization through hardware or a combination of software and hardware is possible and conceived.

Fig. 10 is an exemplary structural block diagram of an interface display device according to an embodiment of the present disclosure. As shown in Fig. 10, the device includes: a first display module 1000, and a first receiving module 1002.

The first display module 10000 is configured to display a plurality of predetermined functions of a terminal on a first-level display interface of the terminal. The first receiving module 1002 is configured to receive, on the first-level display interface, a first operation performed by a target object, and control the terminal to display a second-level display interface in responsive to the first operation, wherein the second-level display interface is used to respectively display a plurality of different predetermined sub-functions corresponding to the plurality of predetermined functions, the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface.

According to the embodiment of the present disclosure, a plurality of predetermined functions of a terminal are displayed on a first-level display interface of the terminal; and in a case where a first operation executed by a target object is received on the first-level display interface, the terminal is controlled to display a second-level display interface. The second-level interface may display a plurality of predetermined sub-functions corresponding to the plurality of predetermined functions. A first modification operation performed by the target object may be received through a first interface disposed in the first-level display interface so as to modify a display strategy of the first-level display interface, and the second modification operation performed by the target object may also be received through a second interface disposed in the second-level display interface so as to modify a display strategy of the second-level display interface. By the adoption of the technical solution, the display strategy of the first-level display interface can be modified through the first interface of the first-level display interface, and the display strategy of the second-level display interface can also be modified through the second interface of the second-level display interface, so that the technical effect of flexibly modifying the display strategy of the display interface is achieved, and the problems of high cost in producing a demo version and inability to flexibly produce the demo version during the process of product release in the related technology are solved.

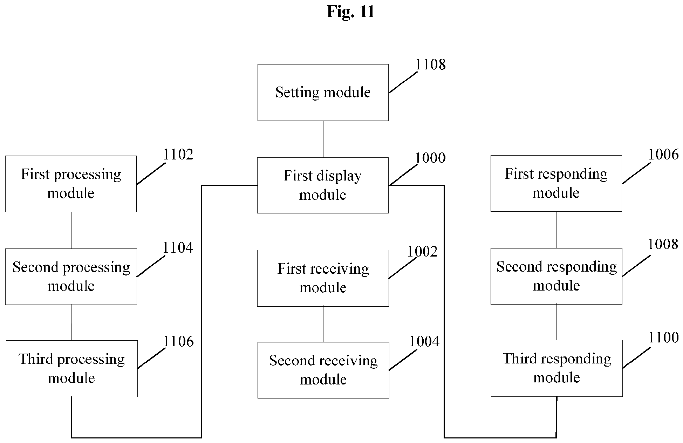

In the embodiment of the present disclosure, as shown in Fig. 11, the device may further include: a second receiving module 1004.

The second receiving module 1004 is configured to receive, after the first operation performed by the target object is received on the first-level display interface and the terminal is controlled to display the second-level display interface in responsive to the first operation, a second operation performed by the target object on the second-level display interface, and control the terminal to display a third-level display interface in responsive to the second operation. Herein, the third-level display interface is used to display a plurality of pieces of multimedia information corresponding to the plurality of predetermined sub-functions.

In the embodiment of the present disclosure, as shown in Fig. 11, the device may further include at least one of: a first responding module 1006, a second responding module 1008, and a third responding module 1100.

The first responding module 1006 is configured to, in a case where the first modification operation performed by the target object is received, store a first resource set into a first resource directory through the first interface in responsive to the first modification operation, wherein the first resource set is used to represent file information corresponding to the plurality of predetermined functions. The second responding module 1008 is configured to, in a case where the second modification operation performed by the target object is received, store a second resource set into a second resource directory through the second interface in responsive to the second modification operation, wherein the second resource set is used to represent file information corresponding to the plurality of predetermined sub-functions. The third responding module 1100 is configured to, in a case where a third modification operation performed by the target object is received, store a third resource set into a third resource directory through a third interface in responsive to the third modification operation, wherein the third resource set is used to represent file information corresponding to the plurality of pieces of multimedia information, and the third interface is used to receive the third modification operation performed by the target object so as to modify a display strategy of the third-level display interface.

In the embodiment of the present disclosure, the device may further include at least one of: a first processing module 1102, a second processing module 1104, and a third processing module 1106.

The first processing module 1102 is configured to acquire a first identifier of the first resource set, and store the first resource set into the first resource directory according to the first identifier and through the first interface. The second processing module 1104 is configured to acquire a second identifier of the second resource set, and store the second resource set into the second resource directory according to the second identifier and through the second interface, wherein the second identifier corresponds to the first identifier. The third processing module 1106 is configured to store a multimedia resource set into the third resource directory according to the second identifier and a file type of the third resource set and through the third interface.

In the embodiment of the present disclosure, as shown in Fig. 11, the device may further include a setting module 1108.

The setting module 1108 is configured to set a monitoring event. The first receiving module 1002 is further configured to be that in a case where a monitor monitors that the monitoring event is triggered, the first-level display interface receives the first operation performed by the target object.

The embodiments of the present disclosure further provide a computer-readable storage medium. The storage medium includes a stored program. Herein, when running, the program executes the method as described by any of the above.

In some exemplary implementations of the embodiment, the above storage medium may be configured to store a program code for executing the following operations.

At S1, a plurality of predetermined functions of a terminal are displayed on a first-level display interface of the terminal.

At S2, a first operation performed by a target object is received on the first-level display interface, and the terminal is controlled to display a second-level display interface in responsive to the first operation, wherein the second-level display interface is used to respectively display a plurality of different predetermined sub-functions corresponding to the plurality of predetermined functions.

Herein, the first-level display interface is correspondingly provided with a first interface, and the second-level display interface is correspondingly provided with a second interface. The first interface is used to receive a first modification operation performed by the target object so as to modify a display strategy of the first-level display interface, and the second interface is used to receive a second modification operation performed by the target object so as to modify a display strategy of the second-level display interface.

In some exemplary implementations of the embodiment, the above-mentioned storage medium includes, but is not limited to: various media capable of storing program codes such as a Universal Serial Bus (USB) flash disk, a Read-Only Memory (ROM), a Random Access Memory (RAM), a mobile hard disk, a magnetic disk, or an optical disk.

The embodiments of the present disclosure further provide an electronic device, including a memory and a processor. The memory stores a computer program, and the processor is configured to run the computer program so as to execute the operations in any of the above method embodiments.

In some exemplary implementations, the electronic device may further include a transmission device and an input-output device. Herein, the transmission device is connected with the processor, and the input-output device is connected with the processor.

In some exemplary implementations of the embodiment, the above processor may be configured to execute the following operations through the computer program.

At S1, a plurality of predetermined functions of a terminal are displayed on a first-level display interface of the terminal.

At S2, a first operation performed by a target object is received on the first-level display interface, and the terminal is controlled to display a second-level display interface in responsive to the first operation, wherein the second-level display interface is used to respectively display a plurality of different predetermined sub-functions corresponding to the plurality of predetermined functions.

Herein, the first-level display interface is correspondingly provided with a first interface, and the second-level display interface is correspondingly provided with a second interface. The first interface is used to receive a first modification operation performed by the target object so as to modify a display strategy of the first-level display interface, and the second interface is used to receive a second modification operation performed by the target object so as to modify a display strategy of the second-level display interface.

In some exemplary implementations, the specific examples in the present embodiment may refer to the examples described in the above embodiments and alternative embodiments, which are not repeated here in the embodiment.

It is apparent that those skilled in the art should appreciate that the above modules and operations of the present disclosure may be implemented by a general-purpose computing device, and they may be centralized in a single computing device or distributed on a network composed of multiple computing devices. In some exemplary implementations, they may be implemented by a program code which is capable of being executed by the computing device, so that they may be stored in a storage device and executed by the computing device; and in some situations, the presented or described operations may be executed in an order different from that described here; or they are made into integrated circuit modules, respectively; or multiple modules and operations of them are made into a single integrated circuit module to realize. Therefore, the present disclosure is not limited to any particular combination of hardware and software.

The above are only the preferred embodiments of the present disclosure and are not used to limit the present disclosure. For those skilled in the art, there may be various changes and variations in the present disclosure. Any modifications, equivalent replacements, improvements and the like made within the principle of the present disclosure shall fall within the scope of protection of the present disclosure.

### Industrial Applicability

A plurality of predetermined functions of a terminal are displayed on a first-level display interface of the terminal; and in a case where a first operation executed by a target object is received on the first-level display interface, the terminal is controlled to display a second-level display interface. The second-level interface may display a plurality of predetermined sub-functions corresponding to the plurality of predetermined functions. A first modification operation performed by the target object may be received through a first interface disposed in the first-level display interface so as to modify a display strategy of the first-level display interface, and a second modification operation performed by the target object may also be received through a second interface disposed in the second-level display interface so as to modify a display strategy of the second-level display interface. By the adoption of the technical solution, the display strategy of the first-level display interface can be modified through the first interface of the first-level display interface, and the display strategy of the second-level display interface can also be modified through the second interface of the second-level display interface, so that the technical effect of flexibly modifying the display strategy of the display interface is achieved, and the problems of high cost in producing a demo version and inability to flexibly produce the demo version during the process of product release in the related technology are solved.

## Claims

1. An interface display method, comprising:
displaying, on a first-level display interface of a terminal, a plurality of predetermined functions of the terminal; and
receiving, on the first-level display interface, a first operation performed by a target object, and controlling the terminal to display a second-level display interface in responsive to the first operation, wherein the second-level display interface is used to respectively display a plurality of different predetermined sub-functions corresponding to the plurality of predetermined functions,
wherein the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface.

2. The method according to claim 1, wherein
after receiving, on the first-level display interface, the first operation performed by the target object and the terminal is controlled to display the second-level display interface in responsive to the first operation, the method further comprises:
receiving, on the second-level display interface, a second operation performed by the target object and controlling the terminal to display a third-level display interface in responsive to the second operation, wherein the third-level display interface is used to display a plurality of pieces of multimedia information corresponding to the plurality of predetermined sub-functions.

3. The method according to claim 2, further comprising at least one of the following:
in a case of receiving the first modification operation performed by the target object, storing, in responsive to the first modification operation, a first resource set into a first resource directory through the first interface, wherein the first resource set is used to represent file information corresponding to the plurality of predetermined functions;
in a case of receiving the second modification operation performed by the target object, storing, in responsive to the second modification operation, a second resource set into a second resource directory through the second interface, wherein the second resource set is used to represent file information corresponding to the plurality of predetermined sub-functions; and
in a case of receiving a third modification operation performed by the target object, storing, in responsive to the third modification operation, a third resource set into a third resource directory through a third interface, wherein the third resource set is used to represent file information corresponding to the plurality of pieces of multimedia information, and the third interface is used to receive the third modification operation performed by the target object so as to modify a display strategy of the third-level display interface.

4. The method according to claim 3, further comprising at least one of the following:
acquiring a first identifier of the first resource set, and storing the first resource set into the first resource directory according to the first identifier and through the first interface;
acquiring a second identifier of the second resource set, and storing the second resource set into the second resource directory according to the second identifier and through the second interface, wherein the second identifier corresponds to the first identifier; and
storing a multimedia resource set into the third resource directory according to the second identifier and a file type of the third resource set and through the third interface.

5. The method according to any one of claims 1-4, before receiving, by the first-level display interface, the first operation performed by the target object, further comprising:
setting a monitoring event; and
in a case where a monitor monitors that the monitoring event is triggered, receiving, by the first-level display interface, the first operation performed by the target object.

6. An interface display device, comprising:
a first display module, configured to display a plurality of predetermined functions of a terminal on a first-level display interface of the terminal; and
a first receiving module, configured to receive, on the first-level display interface, a first operation performed by a target object, and control the terminal to display a second-level display interface in responsive to the first operation, wherein the second-level display interface is used to respectively display a plurality of different predetermined sub-functions corresponding to the plurality of predetermined functions,
wherein the first-level display interface is correspondingly provided with a first interface, the second-level display interface is correspondingly provided with a second interface, the first interface is used to receive a first modification operation performed by the target object so as to modify a display strategy of the first-level display interface, and the second interface is used to receive a second modification operation performed by the target object so as to modify a display strategy of the second-level display interface.

7. The device according to claim 6, further comprising:
a second receiving module, configured to receive, after the first operation performed by the target object is received on the first-level display interface and the terminal is controlled to display the second-level display interface in responsive to the first operation, a second operation performed by the target object on the second-level display interface, and control the terminal to display a third-level display interface in responsive to the second operation, wherein the third-level display interface is used to display a plurality of pieces of multimedia information corresponding to the plurality of predetermined sub-functions.

8. The device according to claim 7, further comprising at least one of the following:
a first responding module, configured to, in a case where the first modification operation performed by the target object is received, store a first resource set into a first resource directory through the first interface in responsive to the first modification operation, wherein the first resource set is used to represent file information corresponding to the plurality of predetermined functions;
a second responding module, configured to, in a case where the second modification operation performed by the target object is received, store a second resource set into a second resource directory through the second interface in responsive to the second modification operation, wherein the second resource set is used to represent file information corresponding to the plurality of predetermined sub-functions; and
a third responding module, configured to, in a case where a third modification operation performed by the target object is received, store a third resource set into a third resource directory through a third interface in responsive to the third modification operation, wherein the third resource set is used to represent file information corresponding to the plurality of pieces of multimedia information, and the third interface is used to receive the third modification operation performed by the target object so as to modify a display strategy of the third-level display interface.

9. A computer-readable storage medium, a computer program being stored on the storage medium, wherein when running, the computer program is configured to execute the method as claimed in any one of claims 1-5.

10. An electronic device, comprising a memory and a processor, wherein the memory stores a computer program, and the processor is configured to run the computer program so as to execute the method as claimed in any one of claims 1-5.
